(19) Europäisches Patentamt
European Patent Office
Office européen des brevets

(11) Numéro de publication : **0 102 280**
**B1**

(12) **FASCICULE DE BREVET EUROPÉEN**

(45) Date de publication du fascicule du brevet : **05.03.86**

(51) Int. Cl.⁴ : **C 22 B 58/00**, C 01 G 15/00, C 22 B 3/00

(21) Numéro de dépôt : **83401585.1**

(22) Date de dépôt : **01.08.83**

(54) **Procédé d'extraction du gallium à l'aide d'hydroxyquinoléines substituées et de composés organiques comportant un groupement sulfate ou sulfonate.**

(30) Priorité : **26.08.82 FR 8214629**

(43) Date de publication de la demande : **07.03.84 Bulletin 84/10**

(45) Mention de la délivrance du brevet : **05.03.86 Bulletin 86/10**

(84) Etats contractants désignés : **CH DE FR GB IT LI**

(56) Documents cités :
**EP-A- 0 002 970**
**EP-A- 0 021 990**
**CHEMICAL ABSTRACTS, vol. 80, 1974, page 313, no. 64368k, Columbus, Ohio, USA A. MASSOUM et al.: "Complex-formation of gallium(III) 8-hydroxy-7-iodo-quinoline-5-sulfonic acid (ferron)"**
**CHEMICAL ABSTRACTS, vol. 77, 1972, page 598, no. 96575e, Columbus, Ohio, USA L.M. RAGUZINA: "Spectrophotometric determination of gallium(III) indium(III), and thallium(III) by stilbene-4,4'-bis(8-hydroxy-5-sulfoquinolinylazo)-2,2'Disulfonic acid"**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Bauer, Denise**
**8 bis, Allée de la Fontaine**
**F-93460 Le Raincy (FR)**
Inventeur : **Fourre, Patrick**
**27, avenue d'Italie**
**F-75013 Paris (FR)**
Inventeur : **Sabot, Jean-Louis**
**1 Quater avenue Lesage**
**F-78600 Maisons-Laffitte (FR)**

(74) Mandataire : **Dutruc-Rosset, Marie-Claude et al**
**RHONE POULENC RECHERCHES Service Brevets Chimie et Polymères 25, Quai Paul Doumer**
**F-92408 Courbevoie Cedex (FR)**

**EP 0 102 280 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un procédé d'extraction liquide/liquide du gallium contenu dans des solutions aqueuses basiques à l'aide d'hydroxyquinoléines substituées et de composés organiques comportant un groupement sulfate ou sulfonate.

On sait d'après le brevet européen n° 2970 au nom de la demanderesse que le gallium présent dans des solutions aqueuses alcalines peut être extrait dans des conditions cinétiques améliorées au moyen d'une phase organique contenant des hydroxyquinoléines substituées et des composés organiques comportant au moins une fonction acide carboxylique.

Poursuivant ses recherches, la demanderesse a découvert que d'autres composés que ceux comportant au moins une fonction acide carboxylique pouvaient également améliorer la vitesse d'extraction du gallium des solutions aqueuses basiques, sans altérer les excellents taux d'extraction de celui-ci.

La présente invention concerne un procédé d'extraction liquide/liquide du gallium contenu dans des solutions aqueuses basiques par mise en contact de la solution aqueuse avec une phase organique contenant principalement un solvant organique, au moins une hydroxyquinoléine substituée, caractérisé en ce que la phase organique contient en outre au moins un composé organique comportant au moins un groupement sulfate ou sulfonate ayant une fonction acide libre ou sous forme salifiée.

Les solutions aqueuses basiques, traitées selon le procédé de l'invention, sont celles dans lesquelles la concentration en $OH^-$ peut aller jusqu'à 13-14 ions g/l. Ainsi, le procédé de l'invention est particulièrement intéressant pour extraire le gallium contenu dans les lessives d'aluminate de sodium du procédé BAYER de fabrication de l'alumine. La composition de ces lessives correspondant, généralement, à des teneurs en $Na_2O$ comprises entre 100 et 400 g/l et en $Al_2O_3$ de 40 à 150 g/l, les lessives dites « d'attaque » correspondant, généralement, à des teneurs en $Na_2O$ voisines de 300 g/l et en $Al_2O_3$ de 150 g/l, les lessives dites de « décomposition » à des teneurs comprises entre 150 et 200 g/l pour $Na_2O$ et entre 70 et 100 g/l pour $Al_2O_3$.

Les solvants organiques que l'on met en œuvre selon l'invention sont les diluants utilisés en extraction liquide/liquide, ils peuvent être utilisés seuls ou en mélange. Parmi ceux-ci, on peut citer les hydrocarbures aliphatiques comme, par exemple, l'heptane et les coupes pétrolières du type kérosène ; les hydrocarbures aromatiques comme, par exemple, le benzène, le toluène, le xylène et les coupes aromatiques du type SOLVESSO (marque déposée par la Société EXXON) et, enfin, les dérivés halogénés de ces composés comme, par exemple, le chloroforme et le tétrachlorure de carbone, le dichloroéthane et le trichloropropane.

Les hydroxyquinoléines substituées selon l'invention sont celles pouvant extraire le gallium par complexation dans les conditions de l'invention ; elles doivent, de plus, dans ces conditions être plus solubles dans la phase organique que dans la phase aqueuse.

Les hydroxyquinoléines substituées convenant aux fins de l'invention sont notamment celles de formule générale :

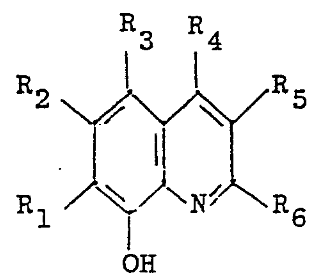

dans laquelle $R_1$, $R_2$, $R_3$, $R_4$, $R_5$, $R_6$ identiques ou différents sont choisis parmi le groupe constitué par l'hydrogène, les halogènes, les radicaux alkyle, alcényle, alicyclique, aryle ; $R_1$, $R_2$, $R_3$, $R_4$, $R_5$, $R_6$ ne pouvant représenter simultanément H.

Parmi ces hydroxyquinoléines substituées, celles convenant particulièrement bien aux fins de l'invention, sont notamment les α-alcényl hydroxy-8 quinoléines, les β-alcényl hydroxy-8 quinoléines et les alkyl hydroxy-8 quinoléines.

Les α-alcényl hydroxy-8 quinoléines préférées selon l'invention ont pour formule générale :

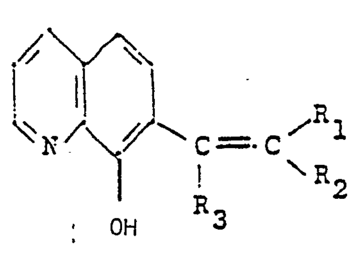

dans laquelle $R_1$, $R_2$, $R_3$ représentent un hydrogène ou un groupement hydrocarboné contenant 1 à 12 atomes de carbone. Parmi celles-ci on utilisera notamment celles de formule générale :

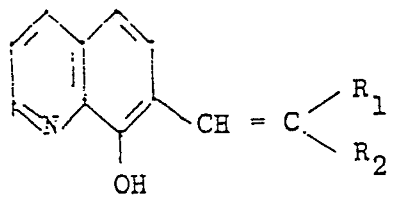

ou

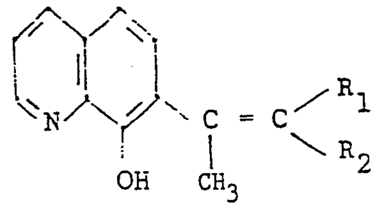

Les β-alcényl hydroxy-8 quinoléines préférées selon l'invention ont pour formule générale :

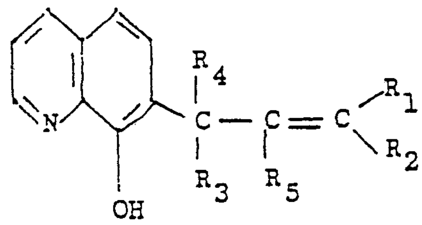

dans laquelle $R_1$, $R_2$, $R_3$, $R_4$, $R_5$ représentent un hydrogène ou un groupement hydrocarboné contenant 1 à 12 atomes de carbone.

Les alkyl hydroxy-8 quinoléines préférées selon l'invention ont pour formule :

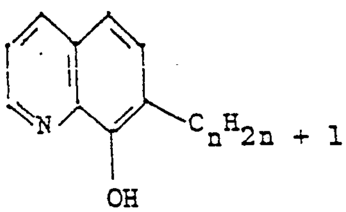

dans laquelle n est compris entre 1 et 20, et, de préférence, entre 5 et 15.

Ces hydroxyquinoléines peuvent être mises en œuvre selon l'invention seules ou en mélange.

La proportion en hydroxyquinoléine substituée dans la phase organique n'est pas critique et peut varier dans de larges limites. Toutefois, une proportion comprise entre 1 et 50 % en volume rapportée à la phase organique convient généralement, une proportion comprise entre 6 et 12 % étant économiquement favorable.

Comme composé organique comportant un groupement sulfate ou sulfonate ayant une fonction acide ou sous forme salifiée, on peut mettre en œuvre des sulfates ou sulfonates substitués représentés par les formules suivantes :

$$R_1O{-}SO_3M \qquad R_2{-}SO_3M$$

dans lesquelles $R_1$ est un radical alkyle ou alicyclique et $R_2$ un radical alkyle, alicyclique, aryle ou alkylaryle, $R_1$ et $R_2$ comportent de 1 à 20 atomes de carbone et de préférence entre 5 et 18.

M représente l'atome d'hydrogène, un atome métallique ou un radical ammonium. La plupart des métaux conviennent, cependant on choisira de préférence un atome alcalin tel que le sodium ou le potassium. C'est ainsi que les sels de sodium des acides sulfuriques et sulfoniques substitués conviennent particulièrement.

Parmi les composés précédents, on peut citer les sulfates d'alcoyle, par exemple, le laurylsulfate de sodium et les alkylbenzène sulfonates, par exemple, le dodécylbenzène sulfonate de sodium. Ces deux sels de sodium sont des agents tensio-actifs particulièrement bon marché.

Ces composés peuvent être utilisés seuls ou en mélange. Ils doivent, de plus, dans les conditions de mise en œuvre de l'invention, être plus solubles dans la phase organique que dans la phase aqueuse.

La proportion du composé organique comportant un groupement sulfate ou sulfonate dans la phase organique n'est pas critique, et peut varier dans de larges limites. Toutefois, une proportion inférieure à 20 % en volume rapportée à la phase organique convient généralement ; une proportion comprise entre 0 (exclu) et 10 % étant favorable économiquement.

Ainsi qu'il est bien connu dans le domaine de l'extraction liquide/liquide, il peut être avantageux d'ajouter dans la phase organique, selon le procédé de l'invention, divers agents modifieurs. Parmi ceux-ci, on peut citer les corps à fonction alcool, en particulier, les alcools lourds dont le nombre d'atomes de

carbone est compris entre 4 et 15, et les phénols lourds ainsi que divers autres composés solvatants, tels que certains esters phosphoriques comme le tri-butyl phosphate, les oxydes de phosphine et les sulfoxydes.

La température de mise en œuvre de l'invention n'est pas un facteur critique. C'est même un des avantages procuré par le procédé de l'invention par rapport à la technique antérieure que de permettre d'opérer l'extraction à n'importe quelle température. Ainsi, généralement, une température d'extraction comprise entre 10 °C et 50 °C permet d'obtenir des taux d'extraction du gallium très satisfaisants.

La nature de l'atmosphère dans laquelle est mis en œuvre le procédé de l'invention n'est pas critique. Toutefois, si l'on veut éviter une certaine dégradation de l'agent d'extraction par oxydation au cours du temps, il est avantageux, selon le procédé de l'invention, d'opérer l'extraction en atmosphère inerte. L'atmosphère inerte pouvant être constituée en particulier par une atmosphère d'argon ou d'azote.

Le procédé de l'invention permet la récupération du gallium de solutions aqueuses basiques lorsque l'étape d'extraction proprement dite est suivie d'une étape de régénération de la phase organique au moyen d'acides forts. Ainsi, la présente invention concerne également un procédé d'extraction liquide/liquide du gallium contenu dans des solutions aqueuses basiques par mise en contact de la solution aqueuse avec une phase organique contenant principalement un solvant organique, au moins une hydroxyquinoléine substituée et au moins un composé organique comportant un groupement sulfate ou sulfonate caractérisé en ce que, en outre, on opère la séparation de la phase organique de la phase aqueuse, qu'au moins une fois, d'une part, on met en contact la phase organique avec une solution d'acide fort, et, d'autre part, on sépare la phase organique restante de la phase aqueuse, et qu'ensuite on récupère le gallium de la phase aqueuse. Les acides forts que l'on peut mettre en œuvre sont, de préférence, choisis parmi le groupe comprenant : l'acide chlorhydrique, l'acide sulfurique, l'acide nitrique, l'acide bromhydrique et l'acide perchlorique.

Dans le cas particulier où la solution aqueuse basique est une lessive d'aluminate de sodium du procédé BAYER de fabrication de l'alumine, il s'avère qu'une certaine quantité d'aluminium et de sodium, transfère notamment, en plus du gallium, de la lessive dans la phase organique au cours de l'étape d'extraction selon l'invention. L'étape de régénération subséquente permet alors, notamment selon différentes variantes, de récupérer un gallium plus ou moins purifié ;

Selon une première variante, après avoir séparé la phase organique de la phase aqueuse, on met en contact la phase organique avec une solution d'acide fort, on sépare la phase aqueuse de la phase organique et on récupère le gallium de la phase aqueuse. La concentration de la solution acide utilisée dépend en particulier de la proportion d'hydroxyquinoléine substituée mise en œuvre dans la phase organique. Pour les proportions préférées d'hydroxyquinoléine, lorsque l'on met en œuvre des solutions d'acide sulfurique ou nitrique ou perchlorique, leur concentration doit, de préférence, être supérieure à 1,2 M ; lorsque l'on met en œuvre des solutions d'acide chlorhydrique ou bromhydrique, leur concentration doit, de préférence, être comprise entre 1,2 M et 2,2 M.

Selon une deuxième variante, après avoir séparé la phase organique de la phase aqueuse, on met en contact la phase organique avec une première solution aqueuse diluée d'un acide pour transférer le sodium et l'aluminium de la phase organique dans la phase aqueuse, le gallium restant dans la phase organique, et, après séparation des phases organique et aqueuse, on met en contact la phase organique restante avec une deuxième solution aqueuse d'acide plus concentrée afin de transférer le gallium de la phase organique dans la phase aqueuse, le gallium étant ensuite séparé de la phase aqueuse. La concentration des solutions acides utilisées dépend, en particulier, de la proportion d'hydroxyquinoléine substituée mise en œuvre dans la phase organique. Pour les proportions préférées d'hydroxyquinoléine, la concentration de la première solution aqueuse d'acide est, de préférence, comprise entre 0,2 M et 0,7 M ; celle de la deuxième solution étant, de préférence, supérieure à 1,2 M, lorsque l'on met en œuvre des solutions d'acide sulfurique ou nitrique ou perchlorique, et, de préférence, comprise entre 1,2 M et 2,2 M, lorsque l'on met en œuvre des solutions d'acide chlorhydrique ou bromhydrique.

Selon une troisième variante, après avoir séparé la phase organique de la phase aqueuse, on met en contact la phase organique avec une première solution aqueuse concentrée d'un acide capable de complexer le gallium sous forme anionique, le gallium restant en solution dans la phase organique tandis que le sodium et l'aluminium passent dans la phase aqueuse, après séparation des phases organique et aqueuse, on met en contact la phase organique restante avec une deuxième solution aqueuse diluée d'acide afin de transférer le gallium de la phase organique dans la phase aqueuse, le gallium étant ensuite séparé de la phase aqueuse ; les acides mis en œuvre dans cette troisième variante, sont, de préférence, les acides chlorhydrique ou bromhydrique. La concentration des solutions acides utilisées dépend en particulier de la proportion d'hydroxyquinoléine substituée mise en œuvre dans la phase organique. Pour les proportions préférées d'hydroxyquinoléine, la concentration de la première solution est, de préférence, comprise entre 4 M et 8 M et celle de la deuxième solution comprise entre 1,2 M et 2,2 M.

Le procédé selon la présente invention peut être mis en œuvre dans les dispositifs industriels classiques utilisés en extraction liquide/liquide. La présente invention permet notamment par rapport au procédé traditionnel de réduire la taille des réacteurs de mélange dans des proportions très appréciables en bénéficiant d'un gain de productivité important ; il est ainsi possible, en particulier avec un système d'extraction multi-étages d'encombrement réduit fonctionnant à contre-courant, de réaliser l'extraction quasi-totale du gallium de solutions aqueuses basiques.

D'autres avantages de l'invention apparaîtront à la lecture des exemples qui vont suivre : ces derniers ne sauraient, en aucune façon, être considérés comme limitant l'invention.

Exemple 1

Une solution aqueuse de composition $Al_2O_3$ 76 g/l, $Na_2O$ 155 g/l, Ga 1 g/l est agitée à 25 °C avec un volume égal d'une phase organique ayant la composition en poids suivante :

— hydroxyquinoléine A : 5 %
— n-butanol : 27 %
— laurylsulfate de sodium (SDS) : x %
— kérosène : (68 – x) %

Après séparation des phases, le taux d'extraction du gallium obtenu est donné dans le tableau 1 ci-dessous en fonction du temps de mélange et de la proportion x (en poids) de SDS mise en œuvre.

Tableau 1 : Taux d'Extraction du Gallium en %

| COMPOSITION DE LA PHASE ORGANIQUE | TEMPS DE MELANGE EN MN | | | | |
|---|---|---|---|---|---|
| | 2 | 5 | 10 | 20 | 30 |
| x = 0 % | 1 | 2 | 5 | 10 | 20 |
| x = 4 % | 15 | 30 | 45 | 48 | 49 |
| x = 12 % | 30 | 45 | 48 | 50 | 50 |

Les résultats consignés dans ce tableau montrent l'accroissement considérable de la vitesse d'extraction du gallium procuré par le procédé selon l'invention mettant en œuvre un sulfate substitué par rapport au procédé traditionnel correspondant à x = 0.

A est une β-alcényl hydroxy-8 quinoléine de formule :

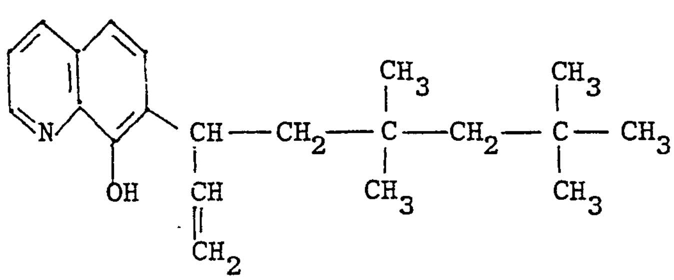

c'est le composé actif du produit vendu par la Société SCHERING sous la marque KELEX 100.

Exemple 2

Cet exemple illustre également l'accroissement, par rapport au procédé traditionnel (x = 0), de la vitesse d'extraction du gallium selon le procédé de l'invention lorsque l'on met en œuvre une autre hydroxyquinoléine que celle de l'exemple 1.

Une solution aqueuse de même composition que celle donnée dans l'exemple 1 est agitée à 50 °C avec un volume égal d'une phase organique ayant la composition en volume suivante :

— hydroxyquinoléine B : 8 %
— n-butanol : 27 %
— SDS : x %
— kérosène : (65 – x) %

Après séparation des phases, le taux d'extraction du gallium obtenu est donné dans le tableau 2 ci-après en fonction du temps de mélange et de la proportion x (en poids) de SDS mis en œuvre.

Tableau 2

| COMPOSITION DE LA PHASE ORGANIQUE | TEMPS DE MELANGE EN MN | | | | |
|---|---|---|---|---|---|
| | 2 | 5 | 10 | 20 | 30 |
| x = 0 % | 3 | 11 | 22 | 30 | 40 |
| x = 12 % | 45 | 47 | 49 | 48 | 49 |

B est une alkylhydroxyquinoléine de formule :

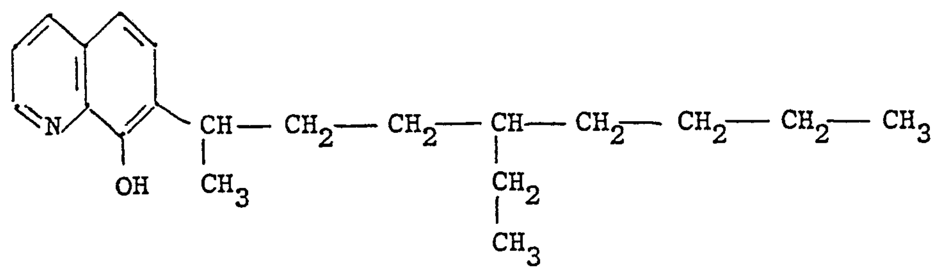

Exemple 3

Cet exemple illustre également l'accroissement par rapport au procédé traditionnel, de la vitesse d'extraction du gallium selon le procédé de l'invention lorsque l'on met en œuvre un acide alkylbenzène-sulfonique (sous forme sel de sodium) ainsi qu'une autre hydroxyquinoléine.

Une solution aqueuse de même composition que celle donnée dans l'exemple 1 est agitée à 30 °C avec un volume égal d'une phase organique ayant la composition en volume suivante :

— hydroxyquinoléine C : 5 %
— n-butanol : 27 %
— dodécylbenzènesulfonate de sodium : x %
— kérosène : (68 – x) %

Après séparation des phases, le taux d'extraction du gallium obtenu est donné dans le tableau 3 ci-après en fonction du temps de mélange et de la proportion x mise en œuvre.

Tableau 3

| COMPOSITION DE LA PHASE ORGANIQUE | TEMPS DE MELANGE EN MN | | | | |
|---|---|---|---|---|---|
| | 2 | 5 | 10 | 20 | 30 |
| x = 0 | 2 | 4 | 8 | 20 | 25 |
| x = 4 | 9 | 19 | 35 | 45 | 47 |
| x = 11 | 14 | 29 | 44 | 48 | 48 |

C est une α-alcényl hydroxyquinoléine de formule :

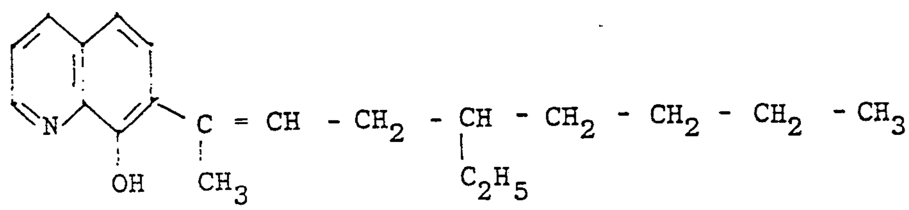

**Revendications**

1. Procédé d'extraction liquide/liquide du gallium contenu dans des solutions aqueuses basiques par mise en contact de la solution aqueuse avec une phase organique contenant principalement un solvant organique, au moins une hydroxyquinoléine substituée, caractérisé en ce que la phase organique contient en outre au moins un composé organique comportant au moins un groupement sulfate ou sulfonate ayant une fonction acide libre ou sous forme salifiée.

2. Procédé selon la revendication 1 caractérisé en ce que ledit composé est un sulfate et un sulfonate substitué répondant respectivement à la formule générale :

$$R_1O—SO_3M \text{ et } R_2—SO_3M$$

dans laquelle $R_1$ est un radical alkyle ou alicyclique et $R_2$ un radical alkyle, alicyclique, aryle ou alkylaryle ; $R_1$ et $R_2$ comportent de 1 à 20 atomes de carbone ; M représente l'atome d'hydrogène, un atome métallique ou un radical ammonium.

3. Procédé selon la revendication 1 ou 2 caractérisé en ce que ledit composé est un sulfate et un sulfonate substitué répondant respectivement à la formule générale :

$$R_1O—SO_3M \text{ et } R_2—SO_3M$$

dans laquelle $R_1$ est un radical alkyle ou alicyclique et $R_2$ un radical alkyle, alicyclique, aryle ou alkylaryle ; $R_1$ et $R_2$ comportent de 5 à 18 atomes de carbone ; M représente l'atome d'hydrogène, un atome de métal alcalin, un radical ammonium.

4. Procédé selon l'une des revendications 2 et 3 caractérisé en ce que le sulfate ou le sulfonate substitué sont respectivement les sels de sodium des acides sulfuriques ou sulfoniques substitués.

5. Procédé selon l'une des revendications 2 à 4 caractérisé en ce que le sulfate substitué est choisi parmi les sulfates d'alcoyle et le sulfonate substitué est choisi parmi les alkylbenzène sulfonates.

6. Procédé selon la revendication 5 caractérisé en ce que le sulfate substitué est le laurylsulfate de sodium et le sulfonate substitué est le dodécylbenzènesulfonate de sodium.

7. Procédé selon la revendication 1 caractérisé en ce que la proportion du composé organique comportant le groupement sulfate ou sulfonate est inférieure à 20 % en volume rapportée à la phase organique.

8. Procédé selon la revendication 1 caractérisé en ce que la proportion du composé organique comportant le groupement sulfate ou sulfonate est inférieure à 10 % en volume rapportée à la phase organique.

9. Procédé selon la revendication 1, caractérisé en ce que l'hydroxyquinoléine a pour formule :

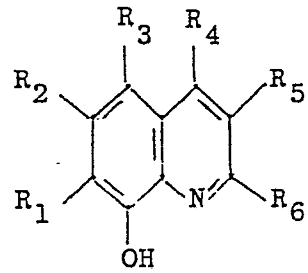

dans laquelle $R_1$, $R_2$, $R_3$, $R_4$, $R_5$, $R_6$ identiques ou différents sont choisis parmi le groupe constitué par l'hydrogène, les halogènes, les radicaux alkyle, alcényle, alicyclique, aryle ; $R_1$, $R_2$, $R_3$, $R_4$, $R_5$, $R_6$ ne pouvant représenter simultanément H.

10. Procédé selon la revendication 9, caractérisé en ce que l'hydroxyquinoléine est choisie parmi le groupe constitué par :

— les α-alcényl hydroxy-8 quinoléoléines de formule générale :

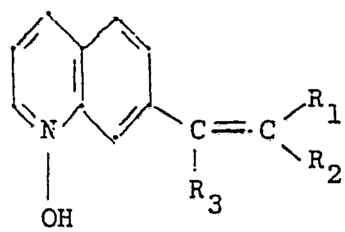

dans laquelle $R_1$, $R_2$ et $R_3$ représentent un hydrogène ou un groupement hydrocarboné contenant 1 à 12 atomes de carbone ;

— les β-alcényl hydroxy-8 quinoléine de formule :

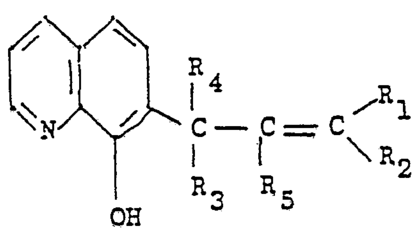

dans laquelle $R_1$, $R_2$, $R_3$, $R_4$, $R_5$ représente un hydrogène ou un groupement hydrocarboné contenant 1 à 12 atomes de carbone ;

— les alkyl hydroxy-8 quinoléines de formule :

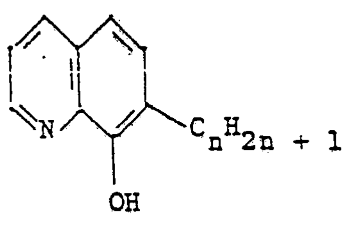

dans laquelle n est compris entre 1 et 20.

11. Procédé selon la revendication 1, caractérisé en ce que la proportion d'hydroxyquinoléine substituée dans la phase organique est comprise entre 1 et 50 % en volume rapportée à la phase organique.

12. Procédé selon la revendication 11, caractérisé en ce que la proportion d'hydroxyquinoléine substituée dans la phase organique est comprise entre 6 et 12 % en volume rapportée à la phase organique.

13. Procédé selon la revendication 1, caractérisé en ce que le solvant organique est choisi parmi le groupe comportant l'un au moins des diluants suivants : l'heptane, les coupes pétrolières du type

kérosène, le benzène, le toluène, le xylène, les coupes aromatiques, le chloroforme, le tétrachlorure de carbone, le dichloroéthane et le trichloropropane.

14. Procédé selon la revendication 1, caractérisé en ce que l'on ajoute à la phase organique un agent modifieur choisi parmi le groupe comportant les corps à fonction alcool et les esters phosphoriques, les oxydes de phosphine, les sulfoxydes.

15. Procédé selon la revendication 14, caractérisé en ce que l'agent modifieur est choisi parmi le groupe comportant les alcools dont le nombre d'atomes de carbone est compris entre 4 et 15 et le tributyl phosphate.

16. Procédé selon l'une des revendications 1 à 15 caractérisé en ce que l'on opère en atmosphère inerte.

17. Procédé selon l'une des revendications 1 à 16, caractérisé en ce que, en outre, on opère la séparation de la phase organique de la phase aqueuse, qu'au moins une fois, d'une part, on met en contact la phase organique avec une solution d'acide fort, et, d'autre part, on sépare la phase organique restante de la phase aqueuse et qu'ensuite on récupère le gallium de la phase aqueuse.

18. Procédé selon la revendication 17, caractérisé en ce que l'acide est choisi parmi le groupe comprenant : l'acide chlorhydrique, l'acide sulfurique, l'acide nitrique, l'acide bromhydrique, l'acide perchlorique.

## Claims

1. Process for liquid/liquid extraction of the gallium present in basic aqueous solutions by bringing the aqueous solution into contact with an organic phase principally containing an organic solvent and at least one substituted hydroxyquinoline, characterised in that the organic phase moreover contains at least one organic compound possessing at least one sulphate or sulphonate group having an acid function which is free or in a salified form.

2. Process according to Claim 1, characterised in that the said compound is a substituted sulphate or sulphonate, respectively, corresponding to the general formula :

$$R_1O—SO_3M \text{ and } R_2—SO_3M$$

in which $R_1$ is an alkyl or alicyclic radical and $R_2$ an alkyl, alicyclic, aryl or alkylaryl radical, $R_1$ and $R_2$ contain from 1 to 20 carbon atoms and M represents a hydrogen atom, a metal atom or an ammonium radical.

3. Process according to Claim 1 or 2, characterised in that the said compound is a substituted sulphate or sulphonate respectively corresponding to the general formula :

$$R_1O—SO_3M \text{ and } R_2—SO_3M$$

in which $R_1$ is an alkyl or alicyclic radical and $R_2$ an alkyl, alicyclic, aryl or alkylaryl radical, $R_1$ and $R_2$ contain from 5 to 18 carbon atoms and M represents a hydrogen atom, an alkali metal atom or an ammonium radical.

4. Process according to one of Claims 2 and 3, characterised in that the substituted sulphate or sulphonate is respectively the sodium salt of a substituted sulphuric acid or sulphonic acid.

5. Process according to one of Claims 2 to 4, characterised in that the substituted sulphate is chosen from among the alkyl sulphates and the substituted sulphonate is chosen from among the alkylbenzenesulphonates.

6. Process according to Claim 5, characterised in that the substituted sulphate is sodium laurylsulphate and the substituted sulphonate is sodium dodecylbenzenesulphonate.

7. Process according to Claim 1, characterised in that the proportion of the organic compound containing the sulphate or sulphonate group is less than 20 % by volume relative to the organic phase.

8. Process according to Claim 1, characterised in that the proportion of the organic compound containing the sulphate or sulphonate group is less than 10 % by volume relative to the organic phase.

9. Process according to Claim 1, characterised in that the hydroxyquinoline has the formula :

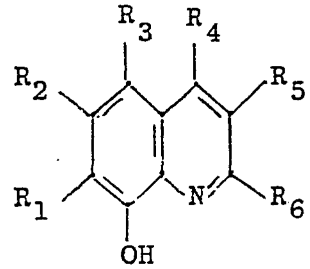

in which $R_1$, $R_2$, $R_3$, $R_4$, $R_5$ and $R_6$, which may be identical or different, are chosen from among the group consisting of hydrogen, the halogens and alkyl, alkenyl, alicyclic and aryl radicals, but $R_1$, $R_2$, $R_3$, $R_4$, $R_5$ and $R_6$ cannot simultaneously represent H.

10. Process according to Claim 9, characterised in that the hydroxyquinoline is chosen from among the group consisting of :

— the α-alkenyl-8-hydroxy-quinolines of the general formula :

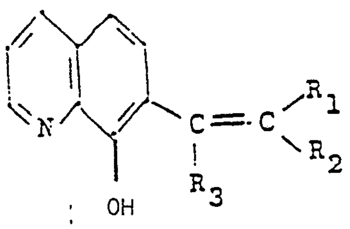

in which $R_1$, $R_2$ and $R_3$ represent hydrogen or a hydrocarbon group containing 1 to 12 carbon atoms,

— the β-alkenyl-8-hydroxy-quinolines of the formula :

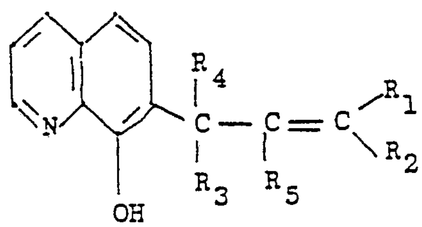

in which $R_1$, $R_2$, $R_3$, $R_4$ and $R_5$ represent hydrogen or a hydrocarbon group containing from 1 to 12 carbon atoms and

— the alkyl-8-hydroxy-quinolines of the formula :

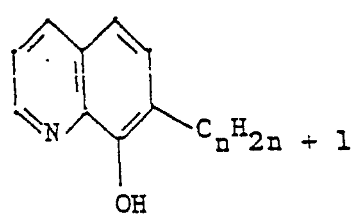

in which n is between 1 and 20.

11. Process according to Claim 1, characterised in that the proportion of substituted hydroxyquinoline in the organic phase is between 1 and 50 % by volume relative to the organic phase.

12. Process according to Claim 11, characterised in that the proportion of substituted hydroxyquinoline in the organic phase is between 6 and 12 % by volume relative to the organic phase.

13. Process according to Claim 1, characterised in that the organic solvent is chosen from among the group comprising at least one of the following diluents : heptane, petroleum cuts of the kerosene type, benzene, toluene, xylene, aromatic cuts, chloroform, carbon tetrachloride, dichloroethane and trichloropropane.

14. Process according to Claim 1, characterised in that a modifier chosen from among the group comprising substances possessing an alcohol group, phosphoric acid esters, phosphine oxides and sulphoxides is added to the organic phase.

15. Process according to Claim 14, characterised in that the modifier is chosen from among the group comprising the alcohols in which the number of carbon atoms is between 4 and 15, and tributyl phosphate.

16. Process according to one of Claims 1 to 15, characterised in that it is carried out in an inert atmosphere.

17. Process according to one of Claims 1 to 16, characterised in that moreover the organic phase is separated from the aqueous phase, and that, at least once, firstly the organic phase is brought into contact with a solution of a strong acid and secondly the remaining organic phase is separated from the aqueous phase, after which the gallium is recovered from the aqueous phase.

18. Process according to Claim 17, characterised in that the acid is chosen from among the group comprising hydrochloric acid, sulphuric acid, nitric acid, hydrobromic acid and perchloric acid.

**Patentansprüche**

1. Verfahren zur Flüssig-Flüssig-Extraktion des in basischen wässrigen Lösungen enthaltenen Galliums durch Inkontaktbringen der wässrigen Lösung mit einer organischen Phase, die im wesentlichen ein organisches Lösungsmittel, wenigstens ein substituiertes Hydroxychinolin enthält, dadurch gekennzeichnet, daß die organische Phase außerdem wenigstens eine organische Verbindung mit wenigstens einer Sulfat- oder Sulfonatgruppe in Form eines Salzes oder mit einer freien Säurefunktion enthält.

2. Verfahren nach Anspruch 1, dadurch gekennzeichnet, daß die genannte Verbindung ein substituiertes Sulfat oder Sulfonat ist, das der allgemeinen Formel entspricht :

$$R_1O—SO_3M \text{ bzw. } R_2—SO_3M$$

in der $R_1$ ein Alkylradikal oder ein alicyclisches Radikal und $R_2$ ein Alkyl-, alicyclisches, Aryl- oder Alkylarylradikal ist, wobei $R_1$ und $R_2$ zwischen 1 und 20 Kohlenstoffatomen enthalten, und M Wasserstoff, ein Metallatom oder ein Ammonium-radikal ist.

3. Verfahren nach Anspruch 1 oder 2, dadurch gekennzeichnet, daß die Verbindung ein substituiertes Sulfat oder Sulfonat ist und der allgemeinen Formel entspricht :

$$R_1O—SO_3M \text{ bzw. } R_2—SO_3M$$

in der $R_1$ ein Alkyl- oder alicyclisches Radikal und $R_2$ ein Alkyl-, alicyclisches, Aryl- oder Alkylarylradikal ist, wobei $R_1$ und $R_2$ zwischen 5 und 18 Kohlenstoffatomen enthalten, und M Wasserstoff, ein Alkalimetallatom oder ein Ammoniumradikal ist.

4. Verfahren nach einem der Ansprüche 2 oder 3, dadurch gekennzeichnet, daß das substituierte Sulfat oder Sulfonat die Natriumsalze der substituierten Schwefeldsäuren oder Sulfonsäuren sind.

5. Verfahren nach einem der Ansprüche 2 bis 4, dadurch gekennzeichnet, daß das substituierte Sulfat unter den Alkylsulfaten und das substituierte Sulfonat unter den Alkylbenzolsulfonaten ausgewählt ist.

6. Verfahren nach Anspruch 5, dadurch gekennzeichnet, daß das substituierte Sulfat Natriumlaurylsulfat und das substituierte Sulfonat Natriumdodecylbenzolsulfonat ist.

7. Verfahren nach Anspruch 1, dadurch gekennzeichnet, daß die Menge der organischen Verbindung mit der Sulfat- oder Sulfonatgruppe unter 20 Vol%, bezogen auf die organische Phase, beträgt.

8. Verfahren nach Anspruch 1, dadurch gekennzeichnet, daß die Menge der organischen Verbindung mit der Sulfat- oder Sulfonatgruppe unter 10 Vol%, bezogen auf die organische Phase, beträgt.

9. Verfahren nach Anspruch 1, dadurch gekennzeichnet, daß das Hydroxychinolin die Formel besitzt :

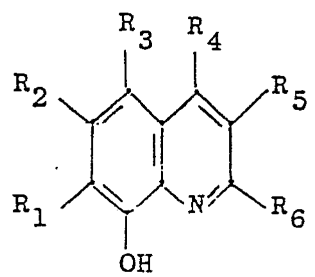

in der $R_1$, $R_2$, $R_3$, $R_4$, $R_5$, $R_6$ gleich oder verschieden sein können und aus der Gruppe von Wasserstoff, den Halogenen, den Alkyl-, Alkenyl-, alicyclischen, und Arylradikalen ausgewählt sind, wobei $R_1$, $R_2$, $R_3$, $R_4$, $R_5$, $R_6$ nicht gleichzeitig Wasserstoff bedeuten können.

10. Verfahren nach Anspruch 9, dadurch gekennzeichnet, daß das Hydroxychinolin ausgewählt ist aus der aus folgenden Verbindung bestehenden Gruppe :

— den α-Alkenyl-8-hydroxy-chinolinen der allgemeinen Formel :

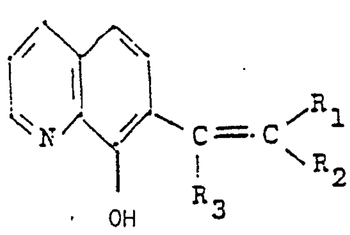

in der $R_1$, $R_2$ und $R_3$ Wasserstoff oder eine $C_1$-$C_{12}$-Kohlenwasserstoffgruppe sein können ;

— den β-Alkenyl-8-hydroxy-chinolinen der Formel :

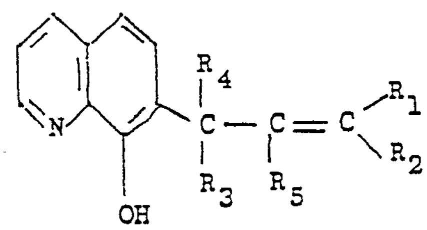

in der $R_1$, $R_2$, $R_3$, $R_4$, $R_5$ Wasserstoff oder eine $C_1$-$C_{12}$-Kohlenwasserstoffgruppe bedeuten,
— den Alkyl-8-hydroxy-chinolinen der Formel :

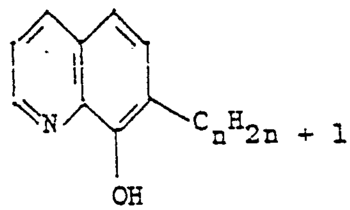

in der n zwischen 1 und 20 liegt.

11. Verfahren nach Anspruch 1, dadurch gekennzeichnet, daß die Menge des substituierten Hydroxychinolins in der organischen Phase zwischen 1 und 50 Vol%, bezogen auf die organische Phase, liegt.

12. Verfahren nach Anspruch 11, dadurch gekennzeichnet, daß die Menge des substituierten Hydroxychinolins in der organischen Phase zwischen 6 und 12 Vol%, bezogen auf die organische Phase, liegt.

13. Verfahren nach Anspruch 1, dadurch gekennzeichnet, daß das organische Lösungsmittel ausgewählt ist aus der Gruppe, die wenigstens eines der folgenden Lösungsmittel umfasst : Heptan, Erdölschnitte des Kerosintyps, Benzol, Toluol, Xylol, aromatische Schnitte, Chloroform, Tetrachlorkohlenstoff, Dichlorethan und Trichlorpropan.

14. Verfahren nach Anspruch 1, dadurch gekennzeichnet, daß man der organischen Phase ein modifizierendes Mittel zusetzt, das ausgewählt ist aus der Gruppe, die die Stoffe mit einer Alkoholfunktion, die Phosphorsäureester, die Phosphinoxide, und die Sulfoxide umfasst.

15. Verfahren nach Anspruch 14, dadurch gekennzeichnet, daß das modifizierende Mittel ausgewählt ist aus der Gruppe, die die Alkohole mit 4 bis 15 Kohlenstoffatomen und das Tributylphosphat umfasst.

16. Verfahren nach einem der Ansprüche 1 bis 15, dadurch gekennzeichnet, daß man in inerter Atmosphäre arbeitet.

17. Verfahren nach einem der Ansprüche 1 bis 16, dadurch gekennzeichnet, daß man außerdem die organische Phase von der wässrigen Phase trennt, daß man wenigstens einmal einerseits die organische Phase mit einer Lösung einer starken Säure in Kontakt bringt und andererseits die verbleibende organische Phase von der wässrigen Phase trennt und daß man anschließend das Gallium aus der wässrigen Phase gewinnt.

18. Verfahren nach Anspruch 17, dadurch gekennzeichnet, daß die Säure ausgewählt ist aus der Gruppe, die umfasst : Chlorwasserstoffsäure, Schwefelsäure, Salpetersäure, Bromwasserstoffsäure und Perchlorsäure.